# EUROPEAN PATENT APPLICATION

(11) **EP 4 542 846 A1**
(43) Date of publication of application: **23.04.2025**
(21) Application number: 24207569.5
(22) Date of filing: 18.10.2024
(51) Int. Cl.: H02P 6/06, H02P 6/08, H02P 6/16, H02P 6/17, H02P 6/28, H02P 21/06, H02P 21/08, H02P 25/03

(54) **SENSORED FIELD ORIENTED CONTROL IN A POWER TOOL**

(30) Priority: 20.10.2023 US 202363591860 P; 15.12.2023 US 202363610600 P
(71) Applicant: Milwaukee Electric Tool Corporation, Brookfield, WI 53005 (US)
(72) Inventor: JEVREMOVIC, Vladan, Issaquah, WA (US); GANESAN, Nandini, Milwaukee, WI (US); GASPAR, Austin, E. N., Maple Valley, WA (US); GUPTA, Shuvam, Wauwatosa, WI (US); YANGPINGQING, Hu, Beijing (CN)
(74) Representative: Forresters IP LLP

(57) **Abstract**

A power tool including a housing, a brushless motor, one or more position sensors, a power switching circuit, and an electronic controller. The one or more position sensors are configured to generate output signals corresponding to a rotational position of the brushless motor. The power switching circuit is configured to provide a supply of power from a power source to the brushless motor. The electronic controller is configured to implement field-oriented control ("FOC") of the brushless motor. The electronic controller configured to receive the output signals from the one or more position sensors, determine a parameter of the brushless motor based on the output signals, determine drive parameters for the brushless motor based on the parameter of the brushless motor using FOC, generate drive commands based on the drive parameters, and drive the brushless motor based on the drive commands.

## Description

### RELATED APPLICATIONS

This application claims the benefit of U.S. Provisional Patent Application No. 63/591,860, filed October 20, 2023, and U.S. Provisional Patent Application No. 63/610,600, filed December 15, 2023, the entire content of each of which is hereby incorporated by reference.

### FIELD

Embodiments described herein relate to power tools including brushless direct current motors.

### SUMMARY

Conventional brushless direct current ("DC") motors include a stator and a rotor configured to rotate with respect to the stator by a magnetic field generated in one or more phases of the stator. Typically, the stator and rotor are separated by an air-gap. In order to properly generate the magnetic field in the correct phase(s), conventional brushless DC motors further include a plurality of sensors, such as position sensors (e.g., magnetic sensors, Hall effect sensors, inductive sensors, magnetic or inductive sine/cosine encoders, etc.), configured to sense an angular position of the rotor with respect to the stator. In order to properly generate the magnetic field in the correct phase(s), one or more control algorithms are used to control the energization of the phases of the stator.

Embodiments described herein relate to a power tool that is configured to implement sensored field-oriented control ("sFOC"). In sFOC, both the stator and the rotor produce flux. In particular, the stator flux current, i_{d}, and the stator torque current, i_{q}, are two component currents making up the stator current vector, Iₛ. Therefore, stator flux can be determined as a function of stator current. The goal of sFOC is to align the stator flux to be orthogonal to the rotor flux. Once the position of the rotor is known, the power tool controls the phases of the stator to produce the proper magnetic field such that the stator flux remains orthogonal to the rotor flux. Controlling a motor via sFOC provides various benefits, such as independent control of motor speed and motor torque.

Unlike other control topologies, sFOC does not use one or three low-side shunts to measure the DC bus or motor line currents. Instead, sFOC uses two inline shunts that accurately measure inverter/motor line currents and allow arbitrary sampling within the PWM period with solid immunity to the PWM noise. Additionally, the high-side DC bus current sensor provides robust short-circuit and overcurrent protection for the inverter. As a result, sFOC enables actual overcurrent detection on two out of three line currents.

Also, unlike other control techniques, sFOC estimates rotor speed and continuous rotor angle based on the logic values of position sensor (e.g., digital Hall effect sensor) signals and their transitional event (e.g., rising or falling edges) without employing any interrupt routines on the microcontroller. As a result, the commutation of the inverter using the continuous angle results in sinusoidal stator currents with low harmonic content.

Additionally, unlike classic block commutation control topologies often used in power tools and outdoor power equipment, sFOC exhibits better dynamic and steady-state performance and controllability.

Power tools described herein include a housing, a brushless motor, one or more position sensors, a power switching circuit, and an electronic controller. The brushless motor is disposed in the housing. The brushless motor includes a rotor and a stator. The rotor is coupled to a motor shaft and is arranged to rotate about a longitudinal axis. The longitudinal axis extends through the motor shaft. The motor shaft is arranged to produce a rotational output to a drive mechanism. The one or more position sensors are disposed adjacent to the brushless motor. The one or more position sensors are configured to generate output signals corresponding to a rotational position of the brushless motor. The power switching circuit is configured to provide a supply of power from a power source to the brushless motor. The electronic controller is connected to the one or more position sensors and the power switching circuit, the electronic controller is configured to implement field-oriented control ("FOC") of the brushless motor. The electronic controller configured to receive the output signals from the one or more position sensors, determine a parameter of the brushless motor based on the output signals from the one or more position sensors, determine drive parameters for the brushless motor based on the parameter of the brushless motor using FOC, generate drive commands based on the drive parameters, and drive the brushless motor based on the drive commands.

In some aspects, the parameter of the brushless motor includes at least one of a rotational position, a speed, or an acceleration of the brushless motor.

In some aspects, the drive parameter of the brushless motor is a plurality of duty cycles for each phase of the motor.

In some aspects, the electronic controller is further configured to generate, with a speed regulator and the output signals from the one or more position sensors, a current command.

In some aspects, the electronic controller is further configured to determine a rotor speed based on the output signals from the one or more position sensors, and generate a current command using a speed regulator, the current command based on the rotor speed and a target speed.

In some aspects, the electronic controller is further configured to determine, based on a mode command received through a mode selecting switch, to operate in a torque mode, receive a torque input command based on a user input, and generate a current command based on the torque input command.

In some aspects, the power tool further includes a battery pack current sensor electrically connected to the battery pack, a stator current sensor electrically connected to the stator of the motor, and a mixed-signal programmable logic device in communication with the battery pack current sensor and the stator current sensor, the mixed-signal programmable logic device configured to detect a fault condition.

In some aspects, the fault condition is a short circuit condition.

In some aspects, the electronic controller is further configured to determine a first feed forward term and a second feed forward term based on a signal from a stator current sensor and the output signals from the one or more position sensors, wherein the first feed forward term corresponds to a motor speed and the second feed forward term corresponds to a motor torque.

Methods described herein for controlling a brushless motor of a handheld power tool include receiving output signals from one or more position sensors, determining a parameter of the brushless motor based on the output signals from the one or more position sensors, determining drive parameters for the brushless motor based on the parameter of the brushless motor using field oriented control, generating drive commands based on the drive parameters, and driving the brushless motor based on the drive commands.

In some aspects, the method further includes generating, with a speed regulator and the output signals from the one or more position sensors, a current command.

In some aspects, the method further includes determining a rotor speed based on the output signals from the one or more position sensors, and generating a current command using a speed regulator, the current command based on the rotor speed and a target speed.

In some aspects, the method further includes determining, based on a mode command received through a mode selecting switch, to operate in a torque mode, receiving a torque input command based on a user input, and generating a current command based on the torque input command.

In some aspects, the method further includes determining a first feed forward term and a second feed forward term based on a signal from a stator current sensor and the output signals from the one or more position sensors, wherein the first feed forward term corresponds to a motor speed and the second feed forward term corresponds to a motor torque.

Power tools described herein include a housing, a brushless motor, one or more position sensors, a stator current sensor, a power switching circuit, and an electronic controller. The brushless motor is disposed in the housing. The brushless motor includes a rotor and a stator. The rotor is coupled to a motor shaft and is arranged to rotate about a longitudinal axis. The longitudinal axis extends through the motor shaft. The motor shaft is arranged to produce a rotational output to a drive mechanism. The one or more position sensors are disposed adjacent to the brushless motor. The one or more position sensors are configured to generate output signals corresponding to a rotational position of the brushless motor. The stator current sensor is configured to determine the current within at least one phase of the motor. The power switching circuit is configured to provide a supply of power from a power source to the brushless motor. The electronic controller is connected to the one or more position sensors and the power switching circuit, the electronic controller is configured to implement field-oriented control ("FOC") of the brushless motor. The electronic controller configured to receive the output signals from the one or more position sensors, determine a speed of the brushless motor based on the output signals from the one or more position sensors, determine a speed of the brushless motor based on the output signals from the one or more position sensors, determine a first feed forward term and a second feed forward term based on a signal from the stator current sensor and the speed of the brushless motor, generate drive commands based on the first feed forward term and the second feed forward term, and drive the brushless motor based on the drive commands.

In some aspects, the power tool further includes a battery pack current sensor electrically connected to the battery pack, and a mixed-signal programmable logic device in communication with the battery pack current sensor and the stator current sensor, the mixed-signal programmable logic device configured to detect a fault condition.

In some aspects, the fault condition is a short circuit condition.

In some aspects, the electronic controller is further configured to generate, with a speed regulator and the output signals from the one or more position sensors, a current command.

In some aspects, the electronic controller is further configured to determine a rotor speed based on the output signals from the one or more position sensors, and generate a current command using a speed regulator, the current command based on the rotor speed and a target speed.

In some aspects, the power tool further includes the electronic controller is further configured to determine, based on a mode command received through a mode selecting switch, to operate in a torque mode, receive a torque input command based on a user input and generate a current command based on the torque input command.

Before any embodiments are explained in detail, it is to be understood that the embodiments are not limited in application to the details of the configurations and arrangements of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

Unless the context of their usage unambiguously indicates otherwise, the articles "a," "an," and "the" should not be interpreted as meaning "one" or "only one." Rather, these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Accordingly, in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

Other aspects of the embodiments will become apparent by consideration of the detailed description and accompanying drawings.

### BRIEF DESCRIPTION OF THE DRAWINGS

FIG. 1 illustrates a power tool implementing sensored field oriented control, according to some embodiments.
FIG. 2 illustrates a cross-sectional view of a power tool implementing sensored field oriented control, according to some embodiments.
FIG. 3 illustrates a control system for a power tool implementing sensored field oriented control, according to some embodiments.
FIG. 4 is a block diagram for the control system of a power tool implementing sensored field oriented control, according to some embodiments.
FIG. 5 is a flow chart for implementing sensored field oriented control, according to some embodiments.
FIG. 6 is a block diagram of a control topology for a power tool implementing sensored field oriented control, according to some embodiments.

### DETAILED DESCRIPTION

Embodiments described herein relate to power tools, such as handheld power tools, that implement a sensored brushless direct-current motor ("sensored motor") and sensored field-oriented control ("sFOC").

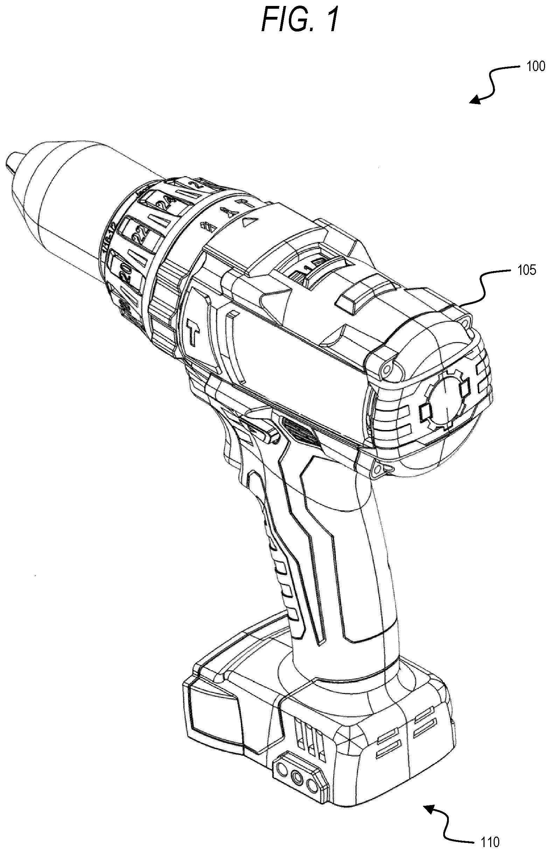

FIG. 1 illustrates a power tool 100 that implements sFOC. In the embodiment illustrated in FIG. 1, the power tool 100 is a drill/driver. In other embodiments, the power tool 100 is a different type of power tool (e.g., an impact wrench, a ratchet, a saw, a hammer drill, an impact driver, a rotary hammer, a grinder, a blower, a trimmer, a chainsaw, etc.). The power tool 100 includes a housing 105 and a battery pack interface 110 for connecting the power tool 100 to, for example, a battery pack. In some embodiments, the battery pack interface 110 may be configured to connect the power tool 100 to another device.

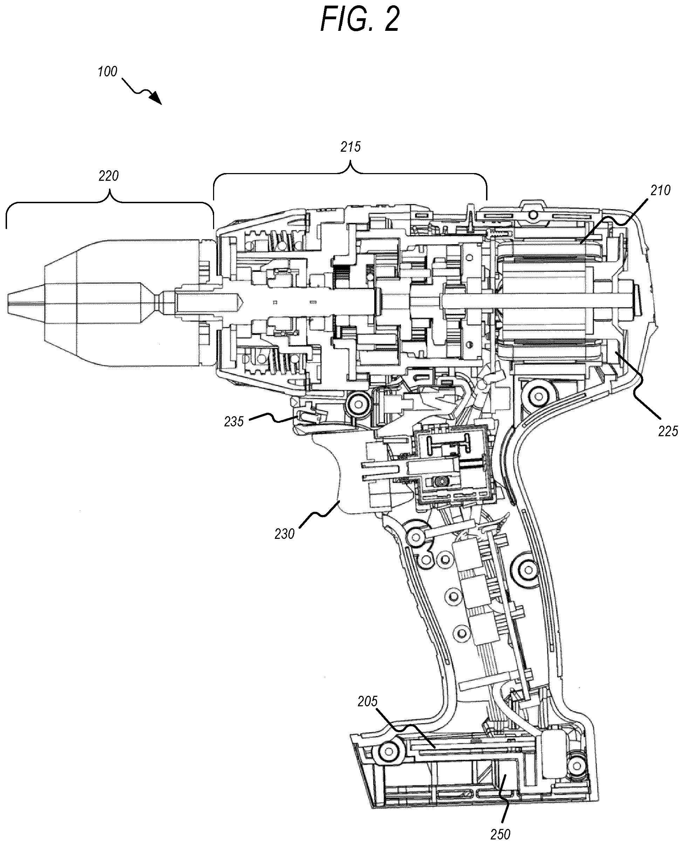

FIG. 2 illustrates a cross section of the power tool 100 of FIG. 1. The power tool 100 includes at least one printed circuit board ("PCB") 205 for various components of the power tool 100. In some embodiments, the PCB 205 is a control PCB. In addition to or instead of the control PCB, the power tool 100 may include a power PCB, a forward/reverse PCB, and/or a light-emitting diode ("LED") PCB. The power tool 100 may further include a motor 210. In some embodiments, the motor 210 may be a sensored motor. Also illustrated in FIG. 2 is a drive mechanism 215 for transmitting the rotational output of the motor 210 to an output unit 220, and a cooling fan 225 rotated by the motor 210 and used to provide a cooling air flow over components of the power tool 100. The power tool 100 may further include a trigger 230 configured to be actuated by a user. In some embodiments, an amount of actuation of the trigger 230 may be used to determine an amount of power supplied to the motor 210. The power tool 100 may further include a work light 235 configured to illuminate a working area of the power tool 100. In some embodiments, the work light 235 may be mounted below the drive mechanism 215. In some embodiments, the work light 235 may be configured to be activated in response to an actuation of the trigger 230.

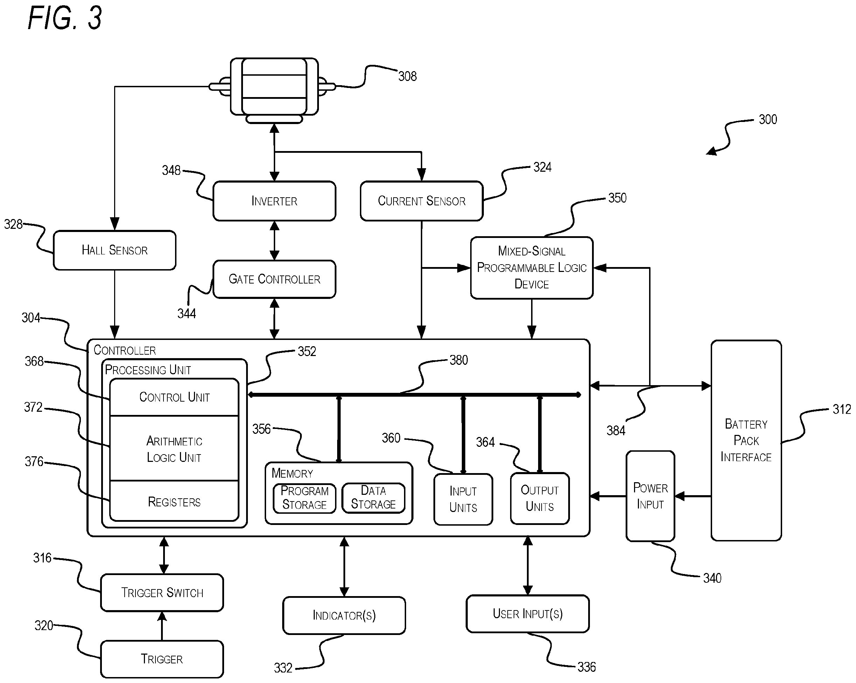

FIG. 3 illustrates a control system 300 for a power tool implementing sensored field oriented control (for example, the power tool 100 of FIG. 1). The control system 300 includes a controller 304. The controller 304 is electrically and/or communicatively connected to a variety of modules or components of the power tool. For example, the illustrated controller 304 is electrically connected to a motor 308 (for example, the motor 210 of FIG. 2), a battery pack interface 312 (for example, the battery pack interface 110 of FIG. 1), a trigger switch 316 (connected to a trigger 320, for example, the trigger 230 of FIG. 2), one or more sensors including at least a current sensor 324, sensors or position sensors (e.g., magnetic sensors, Hall effect sensors, inductive sensors, magnetic or inductive sine/cosine encoders, etc.) 328, a temperature sensor, one or more indicators 332, one or more user input modules 336, a power input module 340, a gate controller 344 (connected to an inverter 348), and a mixed-signal programmable logic device ("MS-PLD") 350. The motor 308 includes a rotor, a stator, and a shaft that rotates about a longitudinal axis.

The controller 304 includes combinations of hardware and software that are operable to, among other things, control the operation of the power tool, monitor the operation of the power tool, activate the one or more indicators 332 (e.g., an LED), etc. The gate controller 344 is configured to control the inverter 348 to convert a DC power supply to a three-phase signal for powering the phases of the motor 308. The current sensor 324 is configured to, for example, sense a current between the inverter 348 and the motor 308. The temperature sensor is configured to, for example, sense a temperature of the inverter 348. The MS-PLD 350 is configured to, for example, detect a short-circuit or line overcurrent event. In some embodiments, voltage signals that are proportional to the line currents (iₐ and i_{c}) and DC bus current (I_{dc}) are compared to predefined thresholds inside the MS-PLD 444 to detect the short-circuit or line overcurrent events.

The controller 304 includes a plurality of electrical and electronic components that provide power, operational control, and protection to the components and modules within the controller 304 and/or the power tool 100. For example, the controller 304 includes, among other things, a processing unit 352 (e.g., a microprocessor, a microcontroller, or another suitable programmable device), a memory 356, input units 360, and output units 364. The processing unit 352 includes, among other things, a control unit 368, an arithmetic logic unit ("ALU") 372, and a plurality of registers 376 (shown as a group of registers in FIG. 3) and is implemented using a known computer architecture (e.g., a modified Harvard architecture, a von Neumann architecture, etc.). The processing unit 352, the memory 356, the input units 360, and the output units 364, as well as the various modules or circuits connected to the controller 304 are connected by one or more control and/or data buses (e.g., common bus 380). The control and/or data buses are shown generally in FIG. 3 for illustrative purposes. The use of one or more control and/or data buses for the interconnection between and communication among the various modules, circuits, and components would be known to a person skilled in the art in view of the invention described herein.

The memory 356 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 352 is connected to the memory 356 and executes software instructions that are capable of being stored in a RAM of the memory 356 (e.g., during execution), a ROM of the memory 356 (e.g., on a generally permanent basis), or another non-transitory computer readable medium such as another memory or a disc. Software included in the implementation of the power tool can be stored in the memory 356 of the controller 304. The software includes, for example, firmware, one or more applications, program data, filters, rules, one or more program modules, and other executable instructions. The controller 304 is configured to retrieve from the memory 356 and execute, among other things, instructions related to the control processes and methods described herein. In other constructions, the controller 304 includes additional, fewer, or different components.

The battery pack interface 312 includes a combination of mechanical components (e.g., rails, grooves, latches, etc.) and electrical components (e.g., one or more terminals) configured to and operable for interfacing (e.g., mechanically, electrically, and communicatively connecting) the power tool 100 with a battery pack. For example, power provided by the battery pack to the power tool is provided through the battery pack interface 312 to the power input module 340. The power input module 340 includes combinations of active and passive components to regulate or control the power received from the battery pack prior to power being provided to the controller 304. One such component may include a bi-directional Hall effect current sensor disposed at the positive terminal of the battery output and configured to convert the output battery current into an analog voltage input into the MS-PLD 350. The battery pack interface 312 also supplies power to the inverter 348 to be switched by the switching FETs to selectively provide power to the motor 308.

The MS-PLD 350 receives signals corresponding to the inverter/motor line currents, and DC bus currents are compared to predefined thresholds inside the MS-PLD 350 to detect, for example, a short-circuit or line overcurrent event. Upon detecting a fault, the MS-PLD 350 signals a fault to the controller 304. The MS-PLD 350 can be either a simple or a complex mixed-signal PLD that is, for example, EPROM, EEPROM, or flash-based.

The indicators 332 include, for example, one or more light-emitting diodes ("LEDs"). The indicators 332 can be configured to display conditions of, or information associated with, the power tool. For example, the indicators 332 are configured to indicate measured electrical characteristics of the power tool, the status of the device, etc. The one or more user input modules 336 may be operably coupled to the controller 304 to, for example, select a forward mode of operation or a reverse mode of operation, a torque and/or speed setting for the power tool (e.g., using torque and/or speed switches), etc. In some embodiments, the one or more user input modules 336 may include a combination of digital and analog input or output devices required to achieve a desired level of operation for the power tool, such as one or more knobs, one or more dials, one or more switches, one or more buttons, etc. In some embodiments, the one or more user input modules 336 may receive signals wirelessly from a device external to the power tool (e.g., a user's mobile phone).

The controller 304 may be configured to determine whether a fault condition of the power tool is present and generate one or more control signals related to the fault condition. For example, the controller 304 may calculate or include, within memory 356, predetermined operational threshold values and limits for operation of the power tool. For example, when a potential thermal failure (e.g., of a FET, the motor 308, etc.) or an abnormal battery voltage is detected or predicted by the controller 304 or MS-PLD 350, power to the motor 308 can be limited or interrupted until the potential for thermal failure is reduced. If the controller 304 detects one or more such fault conditions of the power tool or determines that a fault condition of the power tool no longer exists, the controller 304 may be configured to provide information and/or control signals to another component of the power tool (e.g., the battery pack interface 312, the indicators 332, etc.). The signals can be configured to, for example, trip or open a fuse of the power tool, reset a switch, etc.

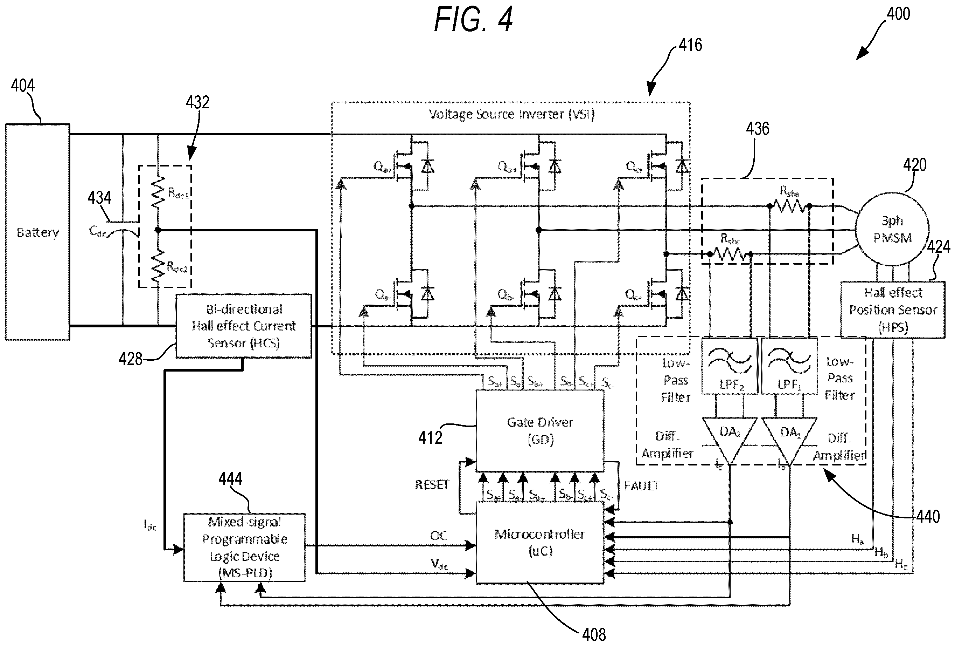

FIG. 4 illustrates a block diagram of an sFOC hardware topology 400 for a power tool (e.g., power tool 100). The sFOC hardware topology 400 is an exemplary implementation of the control system 300 disclosed in FIG. 3, and the incorporation of additional filters or specific implementations of any sensor, electrical component, controller, or power electronics as further disclosed does not preclude other implementations of the control system 300 and the electrical components disclosed therein. The hardware topology 400 includes a battery 404 which powers a microcontroller 408 and a motor 420. The microcontroller 408 is configured to communicate with a gate driver 412 to control a power switching circuit 416 (e.g., an inverter) to drive the motor 420. As the motor 420 rotates, a Hall effect sensor 424 communicates with the microcontroller 408 such that the microcontroller 408 can determine a rotational position of the motor 420. In some embodiments, a plurality of Hall effect sensors 424 (e.g., three Hall effect sensors) are implemented. In some embodiments, sensors other than Hall effect sensors can be used. For example, the sensors 424 can be magnetic sensors, inductive sensors, magnetic or inductive sine/cosine encoders, or other position sensors. Any references herein to the use of Hall effect sensors can be replaced by any of these other types of sensors or position sensors.

The sFOC hardware topology 400 may also include a plurality of electrical and/or electronic components for the sensing, filtering, and processing of electrical signals. For example, the hardware topology 400 includes a battery current sensor 428 (e.g., a bi-directional Hall effect current sensor), a resistive voltage divider 432, a DC bus filter 434, a stator current sensor 436 (e.g., a plurality of resistive current sensing shunts), a plurality of low-pass filters 440, and a mixed-signal programmable logic device ("MS-PLD") 444. The DC bus filter 434 is connected in parallel with the battery output and is configured to minimize voltage ripple and power dissipation across the DC bus due to the thermal stress on the DC bus. Therefore, the DC bus filter 434 is configured to improve the operational life of the power tool. The DC bus filter 434 includes one or more of solid polymer aluminum electrolytic capacitors, solid hybrid aluminum electrolytic capacitors connected, or non-solid (wet) aluminum electrolytic capacitors connected in parallel. The capacitors are selected according to their size, voltage rating, ripple current rating, and equivalent series resistance (ESR) to minimize voltage ripple and power dissipation across the DC bus and provide sufficient operating life given the thermal stress.

The battery current sensor 428 is configured to convert an output battery current from the battery 404 into an analog voltage signal for the MS-PLD 444. The MS-PLD 444 also monitors the filtered current signal from the stator current sensor 436, and compares the signals from the battery current sensor 428 and the stator current sensor 436 to a respective threshold to detect a fault condition (e.g., based on a difference in monitored values). In some embodiments, the gate driver 412 may also be configured to detect a fault in the power switching circuit 416 (e.g., a faulty transistor, a short circuit, etc.). In some embodiments, the battery current sensor 428 is located at a different location within the current path of the power tool 100 than that illustrated in FIG. 4.

With specific attention to the power switching circuit 416, the power switching circuit 416 includes of three half-bridges with six power switches in total. In some embodiments, the power switches are field-effect transistors ("FETs") metal-oxide semiconductor FETs ("MOSFETs"). The power switching circuit 416 is configured to convert a DC voltage from the battery 404 to a three-phase voltage of variable amplitude and frequency to drive the motor 420. Each half-bridge includes two power switches (e.g., MOSFETs with anti-parallel [trench or body] diodes), with both power switches within a half-bridge connected in series and corresponding with a particular phase of the motor 420. In some embodiments, if a power switch current rating is below a required application rating, half-bridges can be paralleled (e.g., six in an inverter, with 2 per phase), resulting in a twelve switch inverter. In some embodiments, the power switches can be silicon, silicon-carbide ("SiC"), or gallium-nitride ("GaN") based. In some embodiments, the resistive shunts Rₛₕₐ and R_{shc} of the stator current sensor 436 are placed between two nonadjacent phases of the motor 420, and are configured to equally dissipate heat to the third motor phase located between the two resistive shunts. The shunts are configured to convert the line currents into voltage signals. After that, two voltage signals proportional to the corresponding line currents are fed to, for example, common and differential mode low-pass filters LPF₁ and LPF₂. After being filtered, the signals are provided to the inputs of two differential amplifiers rated for high input common-mode voltage with pulse width modulation ("PWM") noise rejection blocks inside. Once amplified, filtered, and shifted by an offset voltage, the voltage signals proportional to the line currents are routed to the ADC of the microcontroller 408. The microcontroller 408 then uses these signals to close the current control loop inside the microcontroller 408.

The microcontroller 408 receives signals from the various sensors in order to, among other things, control the operation of the power tool, monitor the power tool, and active one or more indicators 332 (e.g., an LED) based on the status of the power tool. For example, a voltage across the DC bus (V_{dc}) is divided with a high-impedance resistive voltage divider. The attenuated signal is connected to one of the inputs of the microcontroller 408's analog-to-digital converter ("ADC"). The microcontroller 408 is configured to compare the signal from the voltage divider 432 to a predefined threshold value stored in the microcontroller to provide overvoltage and undervoltage protection (e.g., monitoring a voltage of the battery 404). The microcontroller 480 is also configured to account for the signal from the voltage divider 432 when controlling the motor 420 to minimize the effect of the voltage ripple across the DC bus, and for determining a current trajectory in the case of an MTPV implementation. The microcontroller 408 may also incorporate the signals ( produced by the Hall effect sensors 424 and the stator current sensor 436 to control the driving of the motor 420. For example, digital Hall effect sensor signals Hₐ, H_{b}, and H_{c} are filtered and connected from a Hall effect sensor printed circuit board to the microcontroller 408's digital inputs (e.g., general inputs/outputs). These signals are used the microcontroller 408 to estimate the position and speed of the rotor. The microcontroller 408 is then configured to use the signals from the Hall effect sensors 424, the voltage divider 432, and the stator current sensor 436 to implement a closed-loop sensored field-oriented control (sFOC) algorithm. For example, the sFOC algorithm may generate switching signals (Sₐ₊, Sₐ₋, S_{b+}, S_{b-}, S_{c+}, and S_{c-}) for each half-bridge MOSFET to drive the motor 420 at a specific speed or torque.

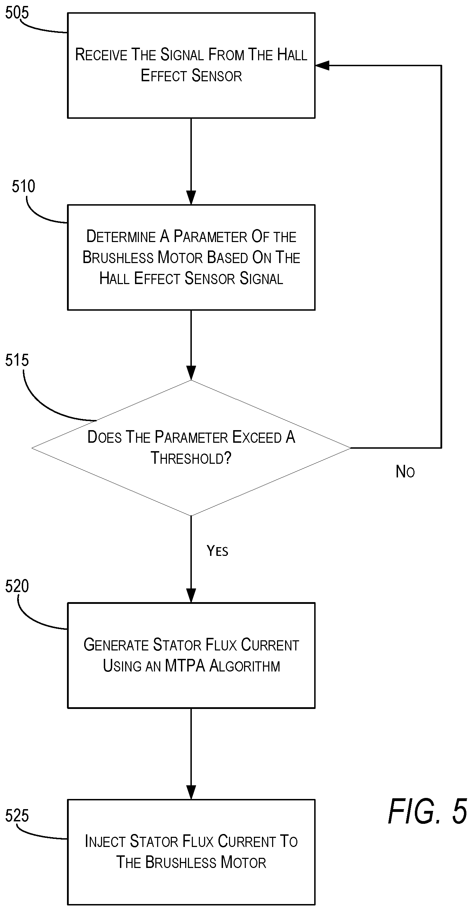

FIG. 5 illustrates a flow chart of a method 500 for implementing a sensored field-oriented control (sFOC) algorithm for a power tool. The sFOC algorithm may be executed by a controller, for example the microcontroller 408 or controller 304 of the power tool 100. The method 500 begins when the controller receives a signal or signals from one or more Hall effect sensors (e.g., the Hall effect sensors 424) at BLOCK 505. The method 500 then uses the signals from the Hall effect sensors to determine a motor parameter at BLOCK 510. The motor parameter may be, for example, a rotational position of the motor, a speed of the motor, an acceleration of the motor, etc. The microcontroller 408 uses the determined parameter of the motor (e.g., the speed of the motor) to implement field oriented control. For example, as will be described in greater detail below, the microcontroller 408 uses the parameter of the motor determined based on the signals from the Hall effect sensors 424 to determine drive parameters (e.g., PWM drive parameters) using sFOC for each phase of the motor 420. In some embodiments, the method 500 may also include determining other parameters of the motor 420 or power tool 100. For example, the method 500 may additionally or alternatively determine a torque, a temperature, an operating time, or another parameter related to the motor 420 or power tool 100. At BLOCK 520, the microcontroller 408 uses the drive parameters to generate drive signals for the motor 420. The motor 420 is then driven based on the drive signals (BLOCK 525).

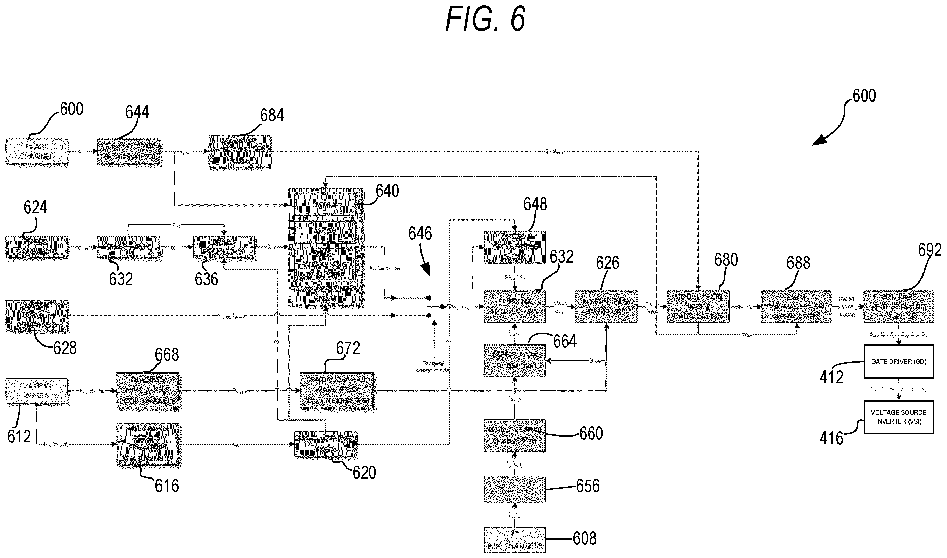

FIG. 6 illustrates a block diagram of a control system 600 of a sensored field-oriented control ("sFOC") algorithm implemented by a power tool (e.g., power tool 100). The control system 600 can be implemented by a controller (e.g., controller 304, microcontroller 408, etc.) of a power tool, and may include one or more additional controllers (e.g., dedicated controllers). The control system 600 also includes one or more sensors and components for receiving signals from sensor. For example, as illustrated in FIG. 6, the control system 600 includes a battery voltage input block 604, a stator current input block 608, and a Hall effect sensor input block 612. A period of the signals from the Hall effect sensors is measured at block 616 by measuring the time between rising and falling edges on three Hall effect sensor signals (Hₐ, H_{b}, H_{c}) to determine the rotor speed (wᵣ). The rotor speed (wᵣ) is then filtered through a low-pass filter at block 620 to produce a filtered speed value (w_{rf}). The control system 600 may also receive one or more user inputs. For example, the control system 600 includes a speed command block 624 and a torque command block 628 configured to respectively generate a speed command (w_{cmd}) and directional torque commands (i_{dcmd} and i_{qcmd}) based on a position of a user input (e.g., trigger 230). The control system 600 further includes a speed ramp block 632 configured to determine a speed reference (corref) based on the speed command and a reference acceleration or deceleration rate. Additionally, the speed ramp block 632 determines an acceleration or deceleration torque (Tacc) that can be used by a speed regulator at block 636 to produce a speed control signal i_{ref}. In other words, the speed regulator at block 636 is configured to receive a first signal ω_{rf} corresponding to a present angular speed of the rotor of the motor (e.g., motor 420) and a second signal ωrref corresponding to a target angular speed for the rotor. The speed regulator at block 636 is then configured to generate a stator current signal i_{ref} to control the stator based on the present angular speed corfin reference to the target angular speed corref.

The control system 600 includes a flux weakening block 640 configured to implement a max-torque-per-amps ("MTPA") algorithm and a max-torque-per-volts ("MTPV") algorithm. The flux weakening block 640 is configured to determine reference direct and quadrature axis stator currents (i_{dref} and i_{qref}) while implementing the MTPA algorithm or the MTPV algorithm with or without flux-weakening action. The MTPA algorithm is configured to receive the stator current signal i_{ref} and generate a flux current signal i_{dref} and a torque current signal i_{qref}. In some embodiments, the MTPA algorithm is configured to determine if an MPTA vector (i.e., a resultant vector created by the component i_{d} and i_{q} vectors) is a minimum current space vector. Additionally, the MTPA algorithm may recalculate the MPTA vector if the MTPA vector is not a minimum current space vector or otherwise does not satisfy predetermined constraints.

The MTPV algorithm additionally receives both the filtered rotor speed (w_{rf}) and a DC bus voltage (V_{dcf}). As shown in FIG. 6, the DC bus voltage (V_{dcf}) is passed through a filter 644 (e.g., a low-pass filter) before being input into the flux weakening block 640. The MTPV algorithm also receives, for example, a flux current signal i_{d}, and generates a torque current signal i_{q}. The MTPV algorithm determines a scaling factor based on an angle of the MTPA vector output by the MTPA algorithm. The scaling factor may be between 0 and 1. The algorithm also includes determining an MTPV vector as the product of the MTPA vector and the scaling factor. In some embodiments, the scaling factor is 1. In these embodiments, the MTPV vector is the same as the MTPA vector. The MTPV algorithm may also determine a negative current based on the MTPV vector. In some embodiments, the user may select an output mode of the power tool. Based on the user selection at block 646, the control system 600 may select a torque mode or a speed mode and accordingly adjust the reference currents used to control the motor.

The reference stator currents (i_{dref} and i_{qref}) and filtered rotor speed (w_{rf}) are fed into a cross-decoupling block 648. The cross-decoupling block 648 is configured to calculate feed forward terms for the current regulators (FF_{d} and FF_{q}) that reduce inherent cross-coupling between the direct and quadrature axes and enable independent regulation of both currents. Using the calculated feed-forward terms FF_{d} and FF_{q}, at block 652 current regulators adjust the flux and torque current signals i_{d} and i_{q} of the motor toward the respective reference currents i_{dref} and i_{qref}, thereby generating reference d-axis and q-axis voltages V_{dref} and V_{qref}. In other words, the control system 600 may be configured to adjust the injected stator flux current based on the feed forward terms.

A current symmetry block 656 calculates the third phase current based on the value of two measured currents (iₐ and i_{c}). The current at the third phase of the motor is calculated using the negative sum of the first motor phase current and the second motor phase current (iₐ and i_{c}). Then, at block 660, the control system 600 transforms the motor currents using a direct Clarke transform to decouple and reduce the symmetrical three-phase system into a two-phase system with only two currents (i_{α} and i_{β}). The control system 600 includes direct Park transform block 664 configured to receive the two-phase current signals (i_{α} and i_{β}) from the direct Clarke transform block 660 and a signal θₕₐₗₗ relating to present angular position of the rotor of the motor from a Hall effect sensors (e.g., Hall effect sensors 328). The direct Clarke transform block 660 is configured to transform a stationary reference frame into a synchronously rotating reference frame. The direct Park transform block 664 is further configured to generate a first current signal i_{q} corresponding to a total torque current of the motor and a second current signal i_{d} corresponding to a total flux current of the motor based on the two-phase current signal i_{α}, i_{β} and the signal θₕₐₗₗ.

In the illustrated embodiment, the control system 600 includes a Hall angle look-up table block 668 that is used to determine discrete (e.g., step-changing) values of the Hall angle (θ_{DHall}) based on the logic values of all three Hall effect sensor signals (Hₐ, H_{b}, H_{c}), and a Hall angle speed tracking observer block 672 configured to determine the angular position signal θₕₐₗₗ. In some embodiments, the Hall angle speed tracking observer block 672 is a phased-locked loop that determines continuous Hall angle (θ_{Hall}) based on discrete Hall angle input (θ_{DHall}) and directional rotor speed (ωᵣ). In other embodiments, the control system 600 may include another methodology for determining the angular position of the rotor.

The control system 600 further includes an inverse Park transform block 676 configured to receive a first signal V_{d} from the flux controller corresponding to a flux voltage, a second signal V_{q} from the torque controller corresponding to a torque voltage, and the signal θₕₐₗₗ corresponding to a present angular position of a rotor of the motor from the hall sensor. The inverse Park transform block 676 may be configured to convert the first signal V_{d} and second signal V_{q} to orthogonal stationary reference frame quantities V_{α} and V_{β} based on the signal θₕₐₗₗ. The inverse Park transform block 475 is then configured to output the orthogonal stationary reference frame quantities V_{α} and V_{β}, which are used to drive the motor 420.

The control system 600 includes a modulation index calculation block 680 configured to determine modulation indices on stationary reference frame axes (m_{α} and m_{β}), and a reference modulation index (m_{ref}) based on the inverse value of the maximum fundamental stator voltage (1/Vₘₐₓ) determined by the maximum inverse voltage block 684. In some embodiments, the scaling factor of the MTPV algorithm may be determined by the modulation index calculation block 680. In some embodiments, the modulation index may be adjustable according to other tool parameters (e.g., temperature, battery life, etc.).

The control system 600 includes a pulse width modulation ("PWM") block 688 configured to calculate drive parameters or duty cycles (PWMₐ, PWMb, PWMc) for each phase of the motor through the implementation or blending of various PWM strategies (e.g., third harmonic injection, min-max, space-vector pulse width modulation, discontinuous pulse width modulation, etc.). In some embodiments, the PWM strategy or a combination of PWM strategies is determined by the reference modulation index (m_{ref}) and stator frequency. If, for example, the reference modulation index requires overmodulation (nonlinear mode) operation, the control system 600 is configured to perform linearization of the overall gain. Upon determining the duty cycles for each phase of the motor, the duty cycles are converted into register values at block 692 and compared to a continuous up-down counter. The control system 600 at block 692 is configured to use the compare register values and counter to generate the drive commands or switching signals (Sₐ₊, Sₐ₋, S_{b+}, S_{b-}, S_{c+}, and S_{c-}) used to control to a gate driver (for example gate driver 412), which then drives a power switching circuit 416 to drive the motor 420.

### REPRESENTATIVE FEATURES

Representative features are set out in the following clauses, which stand alone or may be combined, in any combination, with one or more features disclosed in the text and/or drawings of the specification.

Clause 1. A power tool comprising:
a housing;
a brushless motor disposed in the housing, the brushless motor including a rotor and a stator, the rotor is coupled to a motor shaft arranged to rotate about a longitudinal axis, the longitudinal axis extending through the motor shaft, the motor shaft arranged to produce a rotational output to a drive mechanism;
one or more position sensors disposed adjacent to the brushless motor, the one or more position sensors configured to generate output signals corresponding to a rotational position of the brushless motor;
a power switching circuit configured to provide a supply of power from a battery pack to the brushless motor; and
an electronic controller connected to the one or more position sensors and the power switching circuit, the electronic controller configured to implement field-oriented control ("FOC") of the brushless motor, the electronic controller configured to:
   receive the output signals from the one or more position sensors,
   determine a parameter of the brushless motor based on the output signals from the one or more position sensors,
      determine drive parameters for the brushless motor based on the parameter of the brushless motor using FOC,
      generate drive commands based on the drive parameters, and
      drive the brushless motor based on the drive commands.

Clause 2. The power tool of clause 1, wherein the parameter of the brushless motor includes at least one of a rotational position, a speed, or an acceleration of the brushless motor.

Clause 3. The power tool of any preceding clause, wherein the drive parameter of the brushless motor is a plurality of duty cycles for each phase of the motor.

Clause 4. The power tool of any preceding clause, wherein the electronic controller is further configured to:
generate, with a speed regulator and the output signals from the one or more position sensors, a current command.

Clause 5. The power tool of any preceding clause, wherein the electronic controller is further configured to:
determine a rotor speed based on the output signals from the one or more position sensors; and
generate a current command using a speed regulator, the current command based on the rotor speed and a target speed.

Clause 6. The power tool of clause 5, wherein the electronic controller is further configured to:
determine, based on a mode command received through a mode selecting switch, to operate in a torque mode;
receive a torque input command based on a user input; and
generate a current command based on the torque input command.

Clause 7. The power tool of any preceding clause, further comprising:
a battery pack current sensor electrically connected to the battery pack;
a stator current sensor electrically connected to the stator of the motor; and
a mixed-signal programmable logic device in communication with the battery pack current sensor and the stator current sensor, the mixed-signal programmable logic device configured to detect a fault condition.

Clause 8. The power tool of clause 7, wherein the fault condition is a short circuit condition.

Clause 9. The power tool of any preceding clause, wherein the electronic controller is further configured to:
determine a first feed forward term and a second feed forward term based on a signal from a stator current sensor and the output signals from the one or more position sensors,
wherein the first feed forward term corresponds to a motor speed and the second feed forward term corresponds to a motor torque.

Clause 10. A method of controlling a brushless motor of a handheld power tool, the method comprising:
receiving output signals from one or more position sensors;
determining a parameter of the brushless motor based on the output signals from the one or more position sensors;
determining drive parameters for the brushless motor based on the parameter of the brushless motor using field oriented control ("FOC");
generating drive commands based on the drive parameters; and
driving the brushless motor based on the drive commands.

Clause 11. The method of clause 10, further comprising:
generating, with a speed regulator and the output signals from the one or more position sensors, a current command.

Clause 12. The method of any of clauses 10 to 11, further comprising:
determining a rotor speed based on the output signals from the one or more position sensors; and
generating a current command using a speed regulator, the current command based on the rotor speed and a target speed.

Clause 13. The method of clause 12, further comprising:
determining, based on a mode command received through a mode selecting switch, to operate in a torque mode;
receiving a torque input command based on a user input; and
generating a current command based on the torque input command.

Clause 14. The method of any of clauses 10 to 13, further comprising:
determining a first feed forward term and a second feed forward term based on a signal from a stator current sensor and the output signals from the one or more position sensors,
wherein the first feed forward term corresponds to a motor speed and the second feed forward term corresponds to a motor torque.

Clause 15. A power tool comprising:
a housing;
a brushless motor disposed in the housing, the brushless motor including a rotor and a stator, the rotor is coupled to a motor shaft arranged to rotate about a longitudinal axis, the longitudinal axis extending through the motor shaft, the motor shaft arranged to produce a rotational output to a drive mechanism;
one or more position sensors disposed adjacent to the brushless motor, the one or more position sensors configured to generate output signals corresponding to a rotational position of the brushless motor;
a stator current sensor electrically connected to the stator of the motor and configured to determine the current within at least one phase of the motor;
a power switching circuit configured to provide a supply of power from a battery pack to the brushless motor; and
an electronic controller configured to implement field-oriented control ("FOC") of the brushless motor, the electronic controller configured to:
   receive the output signals from the one or more position sensors,
   determine a speed of the brushless motor based on the output signals from the one or more position sensors,
   determine a first feed forward term and a second feed forward term based on a signal from the stator current sensor and the speed of the brushless motor, the first feed forward term corresponding to a motor speed and the second feed forward term corresponding to a motor torque,
   generate drive commands based on the first feed forward term and the second feed forward term, and
   drive the brushless motor based on the drive commands.

Clause 16. The power tool of clause 15, further comprising:
a battery pack current sensor electrically connected to the battery pack; and
a mixed-signal programmable logic device in communication with the battery pack current sensor and the stator current sensor, the mixed-signal programmable logic device configured to detect a fault condition.

Clause 17. The power tool of clause 16, wherein the fault condition is a short circuit condition.

Clause 18. The power tool of any of clauses 15 to 17, wherein the electronic controller is further configured to:
generate, with a speed regulator and the output signals from the one or more position sensors, a current command.

Clause 19. The power tool of any of clauses 15 to 18, wherein the electronic controller is further configured to:
determine a rotor speed based on the output signals from the one or more position sensors; and
generate a current command using a speed regulator, the current command based on the rotor speed and a target speed.

Clause 20. The power tool of clause 19, wherein the electronic controller is further configured to:
determine, based on a mode command received through a mode selecting switch, to operate in a torque mode;
receive a torque input command based on a user input; and
generate a current command based on the torque input command.

Thus, embodiments described herein provide systems, devices, and methods for implementing sensored field oriented control on a power tool including a brushless DC motor. Various features and advantages are set forth in the following claims.

## Claims

1. A power tool comprising:
a housing;
a brushless motor disposed in the housing, the brushless motor including a rotor and a stator, the rotor is coupled to a motor shaft arranged to rotate about a longitudinal axis, the longitudinal axis extending through the motor shaft, the motor shaft arranged to produce a rotational output to a drive mechanism;
one or more position sensors disposed adjacent to the brushless motor, the one or more position sensors configured to generate output signals corresponding to a rotational position of the brushless motor;
a power switching circuit configured to provide a supply of power from a battery pack to the brushless motor; and
an electronic controller connected to the one or more position sensors and the power switching circuit, the electronic controller configured to implement field-oriented control ("FOC") of the brushless motor, the electronic controller configured to:
receive the output signals from the one or more position sensors,
determine a parameter of the brushless motor based on the output signals from the one or more position sensors,
determine drive parameters for the brushless motor based on the parameter of the brushless motor using FOC,
generate drive commands based on the drive parameters, and
drive the brushless motor based on the drive commands.

2. The power tool of claim 1, wherein the parameter of the brushless motor includes at least one of a rotational position, a speed, or an acceleration of the brushless motor.

3. The power tool of claim 1, wherein the drive parameter of the brushless motor is a plurality of duty cycles for each phase of the motor.

4. The power tool of claim 1, wherein the electronic controller is further configured to:
generate, with a speed regulator and the output signals from the one or more position sensors, a current command.

5. The power tool of claim 1, wherein the electronic controller is further configured to:
determine a rotor speed based on the output signals from the one or more position sensors; and
generate a current command using a speed regulator, the current command based on the rotor speed and a target speed.

6. The power tool of claim 5, wherein the electronic controller is further configured to:
determine, based on a mode command received through a mode selecting switch, to operate in a torque mode;
receive a torque input command based on a user input; and
generate a current command based on the torque input command.

7. The power tool of claim 1, further comprising:
a battery pack current sensor electrically connected to the battery pack;
a stator current sensor electrically connected to the stator of the motor; and
a mixed-signal programmable logic device in communication with the battery pack current sensor and the stator current sensor, the mixed-signal programmable logic device configured to detect a fault condition.

8. The power tool of claim 7, wherein the fault condition is a short circuit condition.

9. The power tool of claim 1, wherein the electronic controller is further configured to:
determine a first feed forward term and a second feed forward term based on a signal from a stator current sensor and the output signals from the one or more position sensors,
wherein the first feed forward term corresponds to a motor speed and the second feed forward term corresponds to a motor torque.

10. A method of controlling a brushless motor of a handheld power tool, the method comprising:
receiving output signals from one or more position sensors;
determining a parameter of the brushless motor based on the output signals from the one or more position sensors;
determining drive parameters for the brushless motor based on the parameter of the brushless motor using field oriented control ("FOC");
generating drive commands based on the drive parameters; and
driving the brushless motor based on the drive commands.

11. The method of claim 10, further comprising:
generating, with a speed regulator and the output signals from the one or more position sensors, a current command.

12. The method of claim 10, further comprising:
determining a rotor speed based on the output signals from the one or more position sensors; and
generating a current command using a speed regulator, the current command based on the rotor speed and a target speed.

13. The method of claim 12, further comprising:
determining, based on a mode command received through a mode selecting switch, to operate in a torque mode;
receiving a torque input command based on a user input; and
generating a current command based on the torque input command.

14. The method of claim 10, further comprising:
determining a first feed forward term and a second feed forward term based on a signal from a stator current sensor and the output signals from the one or more position sensors,
wherein the first feed forward term corresponds to a motor speed and the second feed forward term corresponds to a motor torque.
